# FASCICULE DE BREVET EUROPEEN

(11) **EP 3 536 407 B1**
(45) Date de publication et mention de la délivrance du brevet: **22.09.2021**
(21) Numéro de dépôt: 19161681.2
(22) Date de dépôt: 08.03.2019
(51) Int. Cl.: B05B 7/02, B05B 12/00, B05B 12/08

(54) **PULVÉRISATEUR DE PEINTURE**
FARBSPRÜHVORRICHTUNG
PAINT SPRAYER

(30) Priorité: 09.03.2018 FR 1852054
(43) Date de publication de la demande: 11.09.2019
(73) Titulaire: Exel Industries, 51200 Epernay (FR)
(72) Inventeur: COGNON, Thibault, 75009 Paris (FR); SALZE, Sébastien, 75009 Paris (FR)
(74) Mandataire: Lavoix

(56) Documents cités:
- WO-A1-2014/006593
- DE-A1-102011 004 024
- JP-A- 2014 018 712

## Description

La présente invention concerne un équipement de production industrielle et plus particulièrement un pulvérisateur de peinture comprenant des composants pouvant être changés.

WO 2014/006593 A divulgue un pulvérisateur de peinture comprenant une base sur laquelle sont montés un corps et une buse. Le pulvérisateur comprend également des capteurs aptes à mesurer des caractéristiques dudit pulvérisateur, telles que la pression d'entrée d'air dans le pulvérisateur ou son débit.

De 10 2011 004024 A1 décrit un pulvérisateur comprenant un système de codage, tel qu'un identifiant, qui est transmis à un système de contrôle par une passerelle de communication. Ce système de codage est utilisé pour identifier le pulvérisateur.

JP 2014 018712 A divulgue un pistolet de pulvérisation comprenant une mémoire stockant des informations concernant le pistolet, notamment son type. La mémoire communique avec une unité de contrôle qui est configurée pour lire les informations stockées dans la mémoire.

Il est connu dans le domaine de la pulvérisation de peinture de monter sur une embase un ou plusieurs composants en fonction du type de pulvérisation souhaitée. Ainsi est typiquement monté sur une embase, un pistolet qui peut changer en fonction du type de pulvérisation ou de peinture. Sur ce pistolet est monté un équipement de tête. Cet équipement de tête peut comprendre une tête montée sur le pistolet et une buse montée sur la tête. La tête et la buse déterminent individuellement ou ensemble le débit pulvérisé et/ou la forme du faisceau de pulvérisation. Une modification du débit et/ou de la forme est réalisée en changeant de tête et/ou de buse. Ainsi, d'un composant à l'autre, il est possible de changer un paramètre du procédé, alors même que l'interface du composant reste la même, afin justement de permettre l'interchangeabilité.

Ainsi plusieurs configurations sont possibles en changeant l'un ou l'autre des composants de la série. Certains composants sont compatibles avec l'embase et/ou entre eux et d'autres non. Actuellement la gestion de configuration est réalisée manuellement par l'opérateur.

La présente invention vise à automatiser la gestion de configuration d'un pulvérisateur. Cette automatisation est avantageusement mise à profit afin de simultanément réaliser d'autres traitements : diagnostic, historique, etc.

L'invention a pour objet un pulvérisateur de peinture comprenant une embase, une pluralité de composants montés sur l'embase, tels qu'un pistolet monté sur l'embase, une tête montée sur le pistolet et une buse montée sur la tête, et au moins un capteur apte à mesurer une caractéristique du pulvérisateur. Selon l'invention, chacun des composants est équipé d'un identifiant unique et le au moins un capteur comprend encore un capteur apte à reconnaître l'identifiant unique.

D'autres caractéristiques optionnelles peuvent modifier le pulvérisateur :
- ledit au moins un capteur est intégré à l'embase,
- le pulvérisateur comprend encore un moyen de communication et une unité de traitement, le moyen de communication étant apte à transmettre les informations issues dudit au moins un capteur à l'unité de traitement,
- ledit au moins un capteur est choisi parmi : un capteur d'ouverture apte à mesurer une ouverture du pulvérisateur, un capteur de pression d'air apte à mesurer une pression d'air arrivant au pulvérisateur et/ou un capteur de pression peinture apte à mesurer une pression de peinture arrivant au pulvérisateur,
- l'identifiant unique comprend une étiquette RFID et le capteur comprend un lecteur RFID,
- l'unité de traitement est configurée pour réaliser une analyse de validité de la configuration par analyse de la combinaison des identifiants des composants,
- l'unité de traitement est configurée pour réaliser un diagnostic de bon fonctionnement en analysant les paramètres mesurés par ledit au moins un capteur,
- l'unité de traitement est configurée pour réaliser un historique d'utilisation de chaque composant.

D'autres caractéristiques, détails et avantages de l'invention ressortiront plus clairement de la description détaillée donnée ci-après à titre indicatif en relation avec des dessins sur lesquels :

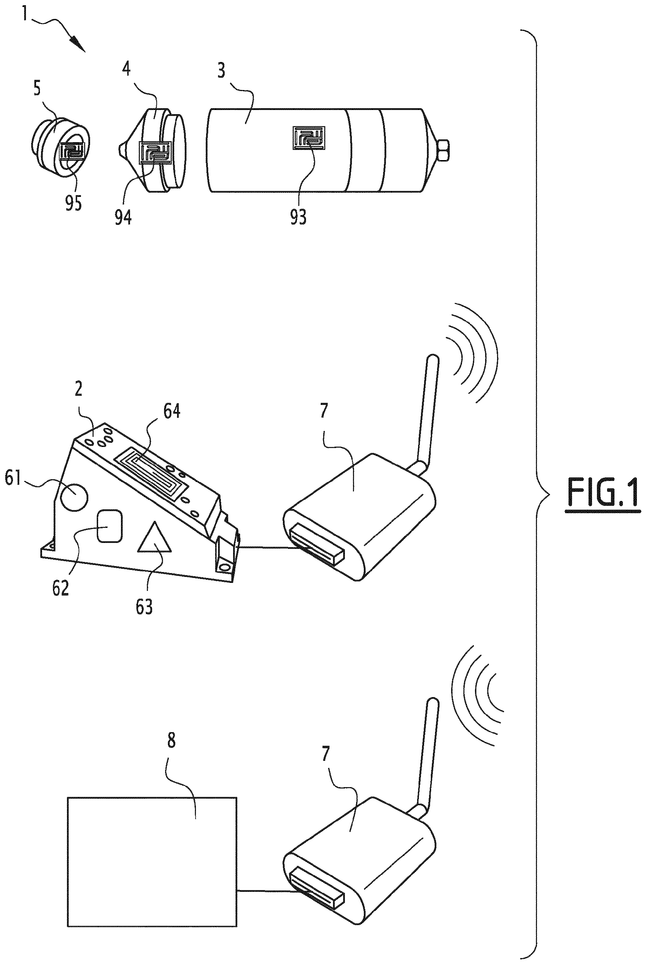

- la figure 1 montre un mode de réalisation d'un pulvérisateur selon l'invention.

Tel qu'illustré de manière indicative à la figure 1, un pulvérisateur 1 de peinture comprend une embase 2. Sur cette embase 2 peuvent être montés une pluralité de composants 3, 4, 5, directement sur l'embase ou sur l'un des autres composants. Ainsi selon un montage possible, un pistolet 3 est monté sur l'embase 2, une tête 4 est montée sur le pistolet 3 et une buse 5 est montée sur la tête 4. D'autres configurations, en série, en parallèle, ou avec d'autres composants sont possibles. Dans le cas d'un pulvérisateur 1 de peinture, la forme du faisceau de peinture par exemple est déterminée par la buse 3. Un changement de forme de faisceau est réalisé par changement de la buse 3.

Afin de connaître les paramètres de fonctionnement et de configuration d'un pulvérisateur 1, ce dernier comprend encore au moins un capteur 61-64 apte à mesurer une caractéristique du pulvérisateur 1.

Selon une caractéristique, ledit au moins un capteur 61-64 est intégré à l'embase 2. Ceci est avantageux en ce que l'embase occupe une position centrale dans le pulvérisateur 1 et voit passer toutes les canalisations (air, peinture), permettant aisément de réaliser des mesures.

L'intérêt de la collecte des informations obtenues par ledit au moins un capteur 61-64 est de rassembler toutes ces informations et le cas échéant les informations de plusieurs pulvérisateurs 1 pour les traiter au sein d'une unité de traitement 8. Cette unité de traitement 8 est avantageusement centrale et peut être déportée du pulvérisateur 1. Aussi un pulvérisateur 1 comprend avantageusement un moyen de communication 7 apte à transmettre les informations issues dudit au moins un capteur 61-64 à l'unité de traitement 8.

Ledit au moins un capteur 61-64 peut cibler un paramètre de fonctionnement du pulvérisateur 1. Ainsi ledit au moins un capteur 61-64 peut être un capteur d'ouverture 61. Un tel capteur d'ouverture est apte à mesurer une ouverture du pulvérisateur 1. Cette information d'ouverture peut être analogique : taux d'ouverture, ou binaire : le pulvérisateur 1 est ouvert, en train de pulvériser, ou fermé.

Ledit au moins un capteur 61-64 peut encore être un capteur de pression d'air 62. Un tel capteur est apte à mesurer une pression d'air arrivant au pulvérisateur 1.

Ledit au moins un capteur 61-64 peut encore être un capteur de pression peinture 63. Un tel capteur est apte à mesurer une pression de peinture arrivant au pulvérisateur 1.

Ces paramètres de fonctionnement de la pulvérisation, permettent une observation du fonctionnement de la pulvérisation. Leur combinaison permet de réaliser un diagnostic de bon fonctionnement.

En plus d'une observation du fonctionnement de la pulvérisation, il est avantageux de connaître la configuration du pulvérisateur 1. Pour cela, chacun des composants 3, 4, 5 est équipé d'un identifiant unique 93, 94, 95. Ledit au moins un capteur comprend dans ce cas encore un capteur 64 apte à reconnaître ledit identifiant 93, 94, 95.

Selon un mode de réalisation préférentiel, un identifiant 93, 94, 95 comprend une étiquette RFID (acronyme de l'anglais : « Radio Frequency Identifier » signifiant identifiant radio fréquence) et le capteur 64 comprend un lecteur RFID, apte à lire une telle étiquette RFID.

Ainsi modifié selon l'invention, un pulvérisateur 1 est apte à observer des paramètres de son fonctionnement et à collecter des identifiants indicatifs de sa configuration. Au moyen du moyen de communication 7 toutes ces informations peuvent être remontées à l'unité de traitement 8 pour analyse et/ou enregistrement.

Au moyen des identifiants 93, 94, 95 des composants 3, 4, 5, lus par le capteur 64, l'unité de traitement 8 peut être configurée pour réaliser une analyse de validité de la configuration. Ceci est typiquement réalisé par analyse de la combinaison des identifiants 93, 94, 95 des composants 3, 4, 5. Ainsi il peut être vérifié qu'une buse 5 montée est bien d'un type compatible avec le pistolet 3 et/ou la tête 4 utilisés (compatibilité technique). Il peut encore être vérifié qu'une buse 5 est bien une buse préconisée et/ou vendue par le constructeur (compatibilité commerciale). Une alarme et/ou un blocage du procédé de pulvérisation peut être déclenché dans le cas contraire.

Ces informations de configuration, indiquant quels composants sont montés, peut permettre de réaliser une gestion de stock des composants en offrant une connaissance des composants montés et/ou des composants disponibles en magasin.

Selon une autre caractéristique, les mesures des paramètres de pulvérisation et le cas échéant les informations de configuration, peuvent permettre de réaliser un diagnostic de bon fonctionnement. Ainsi l'unité de traitement 8 est avantageusement configurée pour réaliser un diagnostic de bon fonctionnement en analysant les paramètres mesurés par ledit au moins un capteur 61-64. Ce diagnostic peut, par exemple, vérifier que le capteur d'ouverture 61 indique bien une ouverture du pulvérisateur 1 lorsque cette ouverture est commandée. Selon un autre exemple, le diagnostic peut comparer un signal de pression d'air, respectivement de pression peinture, lorsque le pulvérisateur 1 est ouvert, avec la valeur attendue de cette pression d'air, respectivement pression peinture. Cette valeur attendue peut dépendre de la tête 4 et/ou de la buse 5 utilisée, connue(s) au moyen du capteur 64. Le diagnostic est préférentiellement réalisé en temps réel. Il peut déclencher une alarme et/ou bloquer le procédé de pulvérisation lorsqu'un diagnostic indique un mauvais fonctionnement.

Selon une autre caractéristique, l'unité de traitement 8 est configurée pour réaliser un historique d'utilisation de chaque composant 3, 4, 5. A partir des informations de configuration, identifiant 93, 94, 95 relevés par le capteur 64, il est possible en ajoutant le temps de tracer quel composant 3, 4, 5 a été utilisé à quel moment. Il est ainsi possible de déterminer la durée d'utilisation ou l'usure d'un composant 3, 4, 5. En recoupant avec les mesures de fonctionnement, il est possible d'affiner les mesures d'usure. Ainsi la durée de vie d'un pistolet 3 est mesurée en nombre d'ouverture. La durée de vie d'une buse ou d'une tête est mesurée en quantité de peinture ayant transité. Toutes ces mesures peuvent être réalisées avec les capteurs 61-64. L'historique d'utilisation est avantageusement utilisé pour réaliser une maintenance préventive du pulvérisateur 1 en changeant à temps chaque composant 3, 4, 5.

L'invention peut être adaptée à un robot de pulvérisation où l'embase correspond au corps et/ou à la jupe du pulvérisateur. La tête et/ou la buse est remplacée par un bol tournant.

L'invention peut également être adaptée à un pistolet manuel de pulvérisation où l'embase est remplacée par le pistolet.

## Revendications

1. Pulvérisateur (1) de peinture comprenant une embase (2), une pluralité de composants (3, 4, 5) montés sur l'embase (2), tels qu'un pistolet (3) monté sur l'embase (2), une tête (4) montée sur le pistolet (3) et une buse (5) montée sur la tête (4), et au moins un capteur (61-64) apte à mesurer une caractéristique du pulvérisateur (1), **caractérisé en ce que** chacun des composants (3, 4, 5) est équipé d'un identifiant unique (93, 94, 95) et ledit au moins un capteur (61-64) comprend encore un capteur (64) apte à reconnaître ledit identifiant unique (93, 94, 95).

2. Pulvérisateur (1) selon la revendication 1, où ledit au moins un capteur (61-64) est intégré à l'embase (2).

3. Pulvérisateur (1) selon l'une quelconque des revendications 1 ou 2, comprenant encore un moyen de communication (7) et une unité de traitement (8), le moyen de communication (7) étant apte à transmettre les informations issues dudit au moins un capteur (61-64) à l'unité de traitement (8).

4. Pulvérisateur (1) selon l'une quelconque des revendications 1 à 3, où ledit au moins un capteur (61-64) est choisi parmi : un capteur d'ouverture (61) apte à mesurer une ouverture du pulvérisateur (1), un capteur de pression d'air (62) apte à mesurer une pression d'air arrivant au pulvérisateur (1) et/ou un capteur de pression peinture (63) apte à mesurer une pression de peinture arrivant au pulvérisateur (1).

5. Pulvérisateur (1) selon l'une quelconque des revendications 1 à 4, où , l'identifiant unique (93, 94, 95) comprend une étiquette RFID et le capteur (64) comprend un lecteur RFID.

6. Pulvérisateur (1) selon l'une quelconque des revendications 1 à 5, où l'unité de traitement (8) est configurée pour réaliser une analyse de validité de la configuration par analyse de la combinaison des identifiants (93, 94, 95) des composants (3, 4, 5).

7. Pulvérisateur (1) selon l'une quelconque des revendications 1 à 6, où l'unité de traitement (8) est configurée pour réaliser un diagnostic de bon fonctionnement en analysant les paramètres mesurés par ledit au moins un capteur (61-64).

8. Pulvérisateur (1) selon l'une quelconque des revendications 1 à 7, où l'unité de traitement (8) est configurée pour réaliser un historique d'utilisation de chaque composant (3, 4, 5).

## Patentansprüche

1. Farbsprühgerät (1), umfassend eine Basis (2), eine Vielzahl von Komponenten (3, 4, 5), die an der Basis (2) montiert sind, wie beispielsweise eine an der Basis (2) montierte Pistole (3), einen an der Pistole (3) montierten Kopf (4) und eine an dem Kopf (4) montierte Düse (5), und mindestens einen Geber (61-64), der in der Lage ist, eine Eigenschaft des Sprühgeräts (1) zu messen, **dadurch gekennzeichnet, dass** jede der Komponenten (3, 4, 5) mit einer eindeutigen Kennung (93, 94, 95) versehen ist und der mindestens eine Sensor (61-64) ferner einen Geber (64) umfasst, der in der Lage ist, die eindeutige Kennung (93, 94, 95) zu erkennen.

2. Sprühgerät (1) nach Anspruch 1, wobei der mindestens eine Geber (61-64) in die Basis (2) integriert ist.

3. Sprühgerät (1) nach einem der Ansprüche 1 oder 2, ferner umfassend eine Kommunikationseinrichtung (7) und eine Verarbeitungseinheit (8), wobei die Kommunikationseinrichtung (7) in der Lage ist, die Informationen von dem mindestens einen Geber (61-64) an die Verarbeitungseinheit (8) zu übertragen.

4. Sprühgerät (1) nach einem der Ansprüche 1 bis 3, wobei der mindestens eine Geber (61-64) ausgewählt ist aus: einem Öffnungsgeber (61), der geeignet ist, eine Öffnung des Sprühgeräts (1) zu messen, einem Luftdruckgeber (62), der geeignet ist, einen an dem Sprühgerät (1) ankommenden Luftdruck zu messen und/oder einem Farbdruckgeber (63), der geeignet ist, einen an dem Sprühgerät (1) ankommenden Farbdruck zu messen.

5. Sprühgerät (1) nach einem der Ansprüche 1 bis 4, wobei die eindeutige Kennung (93, 94, 95) ein RFID-Etikett umfasst und der Geber (64) ein RFID-Lesegerät umfasst.

6. Sprühgerät (1) nach einem der Ansprüche 1 bis 5, wobei die Verarbeitungseinheit (8) konfiguriert ist, um durch Analysieren der Kombination von Kennungen (93, 94, 95) der Komponenten (3, 4, 5) eine Gültigkeitsanalyse der Konfiguration durchzuführen.

7. Sprühgerät (1) nach einem der Ansprüche 1 bis 6, wobei die Verarbeitungseinheit (8) konfiguriert ist, um durch Analysieren der von dem mindestens einen Geber (61-64) gemessenen Parameter eine Diagnose des korrekten Betriebs durchzuführen.

8. Sprühgerät (1) nach einem der Ansprüche 1 bis 7, wobei die Verarbeitungseinheit (8) konfiguriert ist, um eine Nutzungshistorie von jeder Komponente (3, 4, 5) durchzuführen.

## Claims

1. A paint sprayer (1) comprising a base (2), a plurality of components (3, 4, 5) mounted on the base (2), such as a gun (3) mounted on the base (2), a head (4) mounted on the gun (3) and a nozzle (5) mounted on the head (4), and at least one sensor (61-64) able to measure a feature of the sprayer (1), **characterised in that** each of the components (3, 4, 5) is equipped with a unique identifier (93, 94, 95) and said at least one sensor (61-64) further comprises a sensor (64) able to recognize said identifier (93, 94, 95).

2. The sprayer (1) according to claim 1, wherein said at least one sensor (61-64) is integrated into the base (2).

3. The sprayer (1) according to any one of claims 1 or 2, further comprising a communication means (7) and a processing unit (8), the communication means (7) being able to send the information from said at least one sensor (61-64) to the processing unit (8).

4. The sprayer (1) according to any one of claims 1 to 3, wherein said at least one sensor (61-64) is chosen from among: an opening sensor (61) able to measure an opening of the sprayer (1), an air pressure sensor (62) able to measure an air pressure arriving at the sprayer (1) and/or a paint pressure sensor (63) able to measure a paint pressure arriving at the sprayer (1).

5. The sprayer (1) according to any one of claims 1 to 4, wherein the unique identifier (93, 94, 95) comprises an RFID tag and the sensor (64) comprises an RFID reader.

6. The sprayer (1) according to any one of claims 1 to 5, wherein the processing unit (8) is configured to conduct a validity analysis of the configuration by analyzing the combination of the identifiers (93, 94, 95) of the components (3, 4, 5).

7. The sprayer (1) according to any one of claims 1 to 6, wherein the processing unit (8) is configured to conduct a proper operation diagnosis by analyzing the parameters measured by said at least one sensor (61-64).

8. The sprayer (1) according to any one of claims 1 to 7, wherein the processing unit (8) is configured to perform a usage history of each component (3, 4, 5).
